# EUROPEAN PATENT APPLICATION

(11) **EP 3 404 267 A1**
(43) Date of publication of application: **21.11.2018**
(21) Application number: 17171947.9
(22) Date of filing: 19.05.2017
(51) Int. Cl.: F04D 13/06, F04D 15/00, F04D 29/42

(54) **PUMP ASSEMBLY**

(71) Applicant: Grundfos Holding A/S, 8850 Bjerringbro (DK)
(72) Inventor: Klaus Vestergaard Kragelund,, 8240 Risskov (DK); PLOUGMANN, Jan, 8850 Bjerringbro (DK); Aarestrup, Jan Carøe, 8850 Bjerringbro (DK)
(74) Representative: Patentanwälte Vollmann & Hemmer

(57) **Abstract**

The present disclosure provides a pump assembly (1) comprising a pump unit (2) with an impeller (12) having a rotational axis (R), an electrical drive motor for driving the impeller (12), and a control unit for controlling the drive motor, wherein the control unit comprises a main module in a housing (15), a first detachable plug-in module (23) and a second detachable plug-in module (27), wherein the main module is fixed to the drive motor and configured to control the drive motor, wherein the first plug-in module (23) and the second plug-in module (27) are selectively pluggable into a first position to communicate with the main module via at least one wireless communication channel.

## Description

### TECHNICAL FIELD

The present disclosure relates generally to pump assemblies, in particular to speed controlled wet rotor pumps. Such pumps in the power range of 5W to 3kW are typically used as circulation pumps of house heating systems.

### BACKGROUND

Wet rotor pumps usually comprise an impeller within a pump housing for conveying fluid, a stator with coils within a stator housing and a permanent magnetic rotor within a rotor can. The rotor drives the impeller, and the stator current generates a rotating magnetic flux driving the permanent magnetic rotor. The stator current is usually controlled by motor electronics within an electronics housing. The motor electronics of a permanent magnet DC brushless motor typically comprise a frequency converter for controlling the speed of the rotor.

It is known to connect pumps to other devices or a network for diagnosis, statistics, control, maintenance and/or performance optimisation. For instance, a pump may be connected to the WIFI home network like many other electronic household devices, such as smartphones, tablets, refrigerators, heaters or air conditioning systems. This is sometimes referred to as "Internet of Things". However, the typical lifetime of a pump is usually much longer than a typical life cycle of a smartphone or a tablet together with their communication standards. Thus, known pumps may not be able to communicate with other devices or the home network over their full lifetime, because the communication standards in terms of software and hardware change regularly.

Some known pumps can be equipped with additional external modules for providing optional control and/or diagnosis functionalities. For instance, EP 1 452 739 B1 describes a circulation pump with an external additional module for control and/or diagnosis of the pump. However, the additional external module disclosed therein is quite bulky and not flexible in terms of adding or updating control, communication, diagnosis and/or display functionalities.

### SUMMARY

In contrast to such known pumps, embodiments of the present disclosure provide a pump assembly with a compact design and a flexible solution for adding or updating control, communication, diagnosis and/or display functionalities.

In accordance with a first aspect of the present disclosure, a pump assembly is provided comprising
- a pump unit with an impeller having a rotational axis,
- an electrical drive motor for driving the impeller, and
- a control unit for controlling the drive motor,
wherein the control unit comprises a main module in a housing, a first detachable plug-in module and a second detachable plug-in module,
wherein the main module is fixed to the drive motor and configured to control the drive motor,
wherein the first plug-in module and the second plug-in module are selectively pluggable into a first position to communicate with the main module via at least one wireless communication channel.

The two (or more) plug-in modules may provide different control, communication, diagnosis and/or display functionalities. Thus, the pump assembly disclosed herein gives a user, a manufacturer, and repair or maintenance staff the flexibility to select one of the two plug-in modules for adding or updating control, communication, diagnosis and/or display functionalities by plugging it into the first position. There is no need to re-configure a plug-in module for adding or updating control, communication, diagnosis and/or display functionalities. One or more of the plug-in modules may be restricted to a one-time use and be disposable, i.e. it can be used, for instance, to upload a control logic update to the main module by plugging it into the first position, and be disposed afterwards. The plug-in modules may also be restricted to only provide said functionality to the main module of the pump assembly it communicates or pairs with for the first time. The functionality may be blocked when an already paired plug-in module is plugged into another pump assembly. For instance, a first pairing process between a main module may include setting a data field in the plug-in module locking it and thus blocking a pairing with any other pump assembly. Furthermore, the functionality may be intended for specific pump assemblies only and locked if the plug-in module receives data indicating that the pump assembly is not recognised or that it is none of said specific pump assemblies. Similarly, the main module may be configured to allow a pairing only with recognised and/or unlocked plug-in modules.

The plug-in modules may have an essentially identical shape and just different software or data stored. Alternatively or in addition, the different plug-in modules may provide different hardware functionalities, such as a display, a Bluetooth module,a WIFI module and/or an input/output module. Alternatively or in addition, the shape of the plug-in modules may differ from another, for instance, if different hardware functionalities require different space. The two plug-in modules may comprise an essentially identical plug-in portion to be plugged into the first position to communicate with the main module. However, a third plug-in module may comprise a different plug-in portion to be plugged into a second position to communicate with the main module.

Optionally, the first position may be defined by a first slot in the housing of the main module, i.e. the electronics housing of the pump. Optionally, the first slot may extend essentially perpendicular to the rotational axis. This allows for a very compact design with less complexity, because the main module may be located on a printed circuit board (PCB) extending essentially perpendicular to the rotational axis, so that the first or second plug-in module may be laterally inserted into the first slot parallel and close to the PCB.

Optionally, a surface of the first or the second plug-in module may form a surface of the housing when the first or second plug-in module, respectively, is plugged into the first position. The plug-in module surface and the rest of the housing surface may form a neat and flush housing surface, i.e. the plug-in module surface may fill a recess in the housing surface when plugged in.

Optionally, the first, the second and/or a third plug-in module may be selectively pluggable into a second position to communicate with the main module via at least one wireless communication channel. This allows for having two plug-in modules plugged in simultaneously and using their respective functionalities simultaneously and/or in combination with each other. For instance, the first plug-in module may provide a Bluetooth module for communicating with a neighbouring pump assembly and the second or third plug-in module may provide an input/output module for communicating simultaneously with a sensor, a computer or a display.

Optionally and analogous to the first position, the second position may be defined by a second slot in the housing. Optionally, the second slot may be essentially parallel to the first slot. Thereby, a compact sandwich design can be achieved. The second slot can be essentially identical or symmetrical to the first slot for accommodating the first or second plug-in module, or it can be different to accommodate a third plug-in module that may have a different plug-in portion.

Optionally, the main module may comprise a transmission coil between the first slot and the second slot, wherein the main module may be configured to communicate with the first, the second and/or the third plug-in module when plugged into the first and/or second position via the transmission coil and via a single wireless communication channel. The transmission coil may comprise a flat coil on a main module PCB sandwiched between the two plug-in modules plugged into the first and second slot, respectively. The transmission coil may comprise a flat coil on either side or on both sides of the main module PCB. Optionally, the transmission coil may thus define a wireless transmission axis perpendicular to the first slot and/or the second slot. Therefore, the wireless transmission axis may be parallel to the rotational axis.

Optionally, the pump assembly may further comprise an external unit with an external module in an external housing, wherein the first plug-in module and the second plug-in module are selectively pluggable into a third position, wherein the third position is defined by a slot in the external housing. For instance, the external unit may comprise a power supply for inductively powering or charging one or more plug-in modules when plugged into the third position, i.e. the slot. The external unit may comprise two or more, preferably parallel, slots for inductively powering or charging two or more plug-in modules simultaneously. Thereby, certain functionalities of the plug-in modules may be used independently and remotely of the pump unit.

Optionally, the first, the second and/or the third plug-in module comprise at least one module selected from the group consisting of: a Bluetooth communication module, a near field communication (NFC) module, a radio-frequency identification (RFID) module, an infrared module, an IEEE 802.11b direct sequence (WIFI) module, a wireless power transfer (WPT) module, a capacitive coupling module and an inductive coupling module, a sensor module, a pump programming module, a debugging module, an updating module, a display module, and a user input module. Optionally, the first, the second and the third plug-in module may differ from each other in at least one comprised module.

Optionally, the first, the second and/or the third plug-in module may each comprise a transmission coil for both receiving electrical power inductively and communicating wirelessly. Thereby, no direct electrical contact is needed and the plug-in-modules may be fully sealed and/or moulded in an electrically insulating material like plastic. Furthermore, there is no need for electrical contacts protruding the housing. The control unit can thus be securely protected from water and corrosion by a completely closed housing.

Optionally, the transmission coil of the first plug-in module is essentially identical to the transmission coil of the second and/or third plug-in module. This facilitates the communication between the main module and different plug-in modules by using the same communication channel. Optionally, the at least one wireless communication channel may comprise at least one of the group consisting of: Bluetooth communication, near field communication (NFC), radio-frequency identification (RFID), infrared communication, IEEE 802.11b direct (WIFI) sequence, wireless power transfer (WPT), capacitive coupling and inductive coupling. The at least one communication channel can already be part of a standard, become a standard, or may be a bespoke solution for the communication between the main module and any corresponding plug-in module.

Optionally, the main module is configured to receive a first operating command from the first, second and/or third plug-in module, wherein the main module is configured to continue controlling the drive motor based on the first operating command until the main module receives a second operating command that overrules the first operating command. Thereby, the pump unit is operable independently from the detachable plug-in modules. The core functionality of the main module, i.e. the motor control for the desired pumping performance, may be improved, augmented, updated or changed by certain plug-in modules, but may not depend on such a plug-in module being plugged in. The plug-in modules may preferably merely add auxiliary pump functionalities like communication, diagnosis and/or a display.

Optionally, the first, the second and/or the third slot may comprise a tapering surface for providing a frictional resistance with a corresponding tapering surface of the first, second and/or third plug-in module when the first, second and/or third plug-in module is plugged into the first and/or second position. So, the plug-in modules may comprise a narrow front end and a wide back end, and the slots may comprise a wide front opening and a narrow back end. On the one hand, this facilitates plugging in the plug-in module with the narrow front end first into the wide front opening of the slot. On the other hand, the lateral tapering surfaces between the front end and the back end provide a frictional contact for holding the plugged-in plug-in module in place.

Optionally, the first plug-in module may be configured to wirelessly communicate with the second plug-in module, when the first plug-in module is plugged into the first, second or third position and the second plug-in module is plugged into another one of the first, second and third position. Thereby, a pump may communicate with an external unit and/or the plug-in modules may communicate with each other. This gives various possibilities to combine the different functionalities of the plug-in modules. For instance, the first and/or the plug-in module may comprise a user interface for receiving user input and/or a display for displaying information. The user input could be a switching signal that may be invoked by pressing a button and the display on the same or the other plug-in module may show a response to that switching signal or any other diagnosis information, e.g. operating parameters like, rotational speed, flow rate, head, pressure, motor current or power consumption, fluid and/or coil temperature, etc.

Optionally, the main module may be configurable via at least one wireless communication channel by an external configuration module being in close proximity of the housing. Alternatively or in addition, the main module may be simultaneously inductively powered by the external configuration module. Such wireless configuration and/or powering by an external configuration module is in particular advantageous during the manufacturing process of the pump unit. While the hardware of a plurality of manufactured pumps may be identical, the main modules of the control unit of individual pumps may be differently programmed or configured for different applications and/or performances while the pumps are conveyed in a production line. The external configuration module may be a fixed installation of the production line and the pumps in the production line may pass and/or temporarily stop at the configuration module with the housing in close proximity to the configuration module. The configuration module does not need to be plugged into the first or second position for the wireless configuration and/or powering of the main module. "Close proximity" may mean in this respect a distance of not more than 2-3 times of the diameter of a flat transmission coil used for the wireless communication. Preferably, the external configuration module comprises the same or a similar flat transmission coil like the PCB, such that they can be arranged coaxially in close proximity to each other for the wireless communication and/or inductive powering.

In accordance with a second aspect of the present disclosure, a plug-in module of a previously described pump assembly is provided, wherein the plug-in module is pluggable into a first position in order to:
- be inductively powered or charged,
- to communicate with a main module of the pump assembly via at least one wireless communication channel, and
- to provide a functionality to the main module,
wherein the plug-in module is configured to provide said functionality only to the main module of the pump assembly it communicates or pairs with for the first time. Herein, "pairing" shall mean a pre-communication between two modules resulting in a successful acceptance of both modules allowing a communication.

Optionally, said functionality may be a one-time upload of data to the main module, and wherein the plug-in module may be disposable after said one-time upload of data. For instance, such upload of data may be a new pump characteristic f(H,Q), where H is the head and Q is the flow. This allows for easy adapting, upgrading or downgrading the needed pump performance by plugging in the plug-in module. The pump manufacturer may only need to manufacture a single type of pump with a main module and provide a variety of different plug-in modules to cover a wide range of pump performances. The pump is thus better customisable for the needed purpose and more cost-efficient in production by using a plug-in according to the present disclosure. Furthermore, the manufacturer is able to control and limit the use of the plug-in module described herein. A multiple misuse of one plug-in module for more than one pump is prevented.

Optionally, said functionality may be an addition or update of software of the main module. Thus, not only data like a new pump characteristic f(H,Q) can be uploaded to the main module of the pump, but also new communication standard, a new operating logic, or new/updated operating modes like constant speed modes, proportional pressure modes, constant pressure modes, and/or an auto adapt logic for determining optimal operating points.

### SUMMARY OF THE DRAWINGS

Embodiments of the present disclosure will now be described by way of example with reference to the following figures of which:
Fig. 1 shows a perspective view on an example of a pump assembly disclosed herein;
Fig. 2 shows a top view on an example of a pump assembly disclosed herein;
Fig. 3 shows a side view on an example of a pump assembly disclosed herein;
Fig. 4 shows a top and side view on an electronics housing and a first plug-in module of an example of a pump assembly disclosed herein;
Fig. 5 shows a cross-sectional view on an electronics housing of an example of a pump assembly disclosed herein;
Fig. 6 shows a top and side view on a stator housing, motor electronics (without electronics housing) and a third plug-in module of an example of a pump assembly disclosed herein;
Fig. 7 shows a perspective view on a stator housing, motor electronics (without electronics housing) and a third plug-in module of an example of a pump assembly disclosed herein;
Fig. 8 shows a cross-sectional view with an enlarged detail view an example of a pump assembly disclosed herein without a pump housing;
Fig. 9 shows an exploded view on an example of a pump assembly disclosed herein; and
Fig. 10 shows a top view on a stator housing lid and a third plug-in module of an example of a pump assembly disclosed herein;
Fig. 11 shows a cross-sectional view on an electronics housing and a third plug-in module of an example of a pump assembly disclosed herein;
Fig. 12 and 13 show perspective views on an external unit and a first, a second and a third plug-in module of an example of a pump assembly disclosed herein in a plugged-in state and plugged-out state, respectively; and
Fig. 14, 15 and 16 show a top view, a cross-sectional view and a detailed cross-sectional view, respectively, on an example of a pump assembly disclosed herein during a wireless configuration.

### DETAILED DESCRIPTION

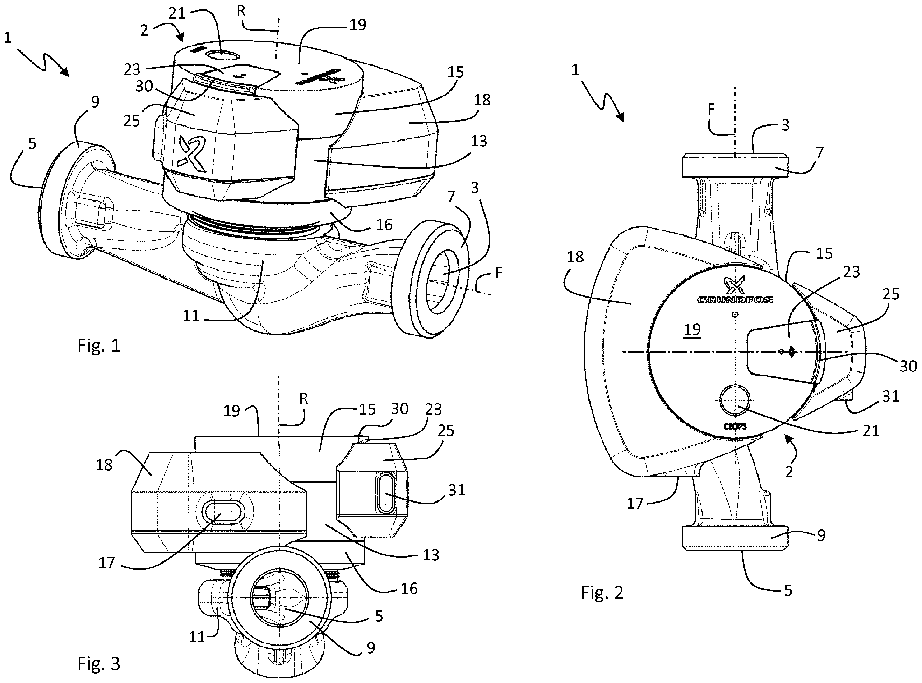

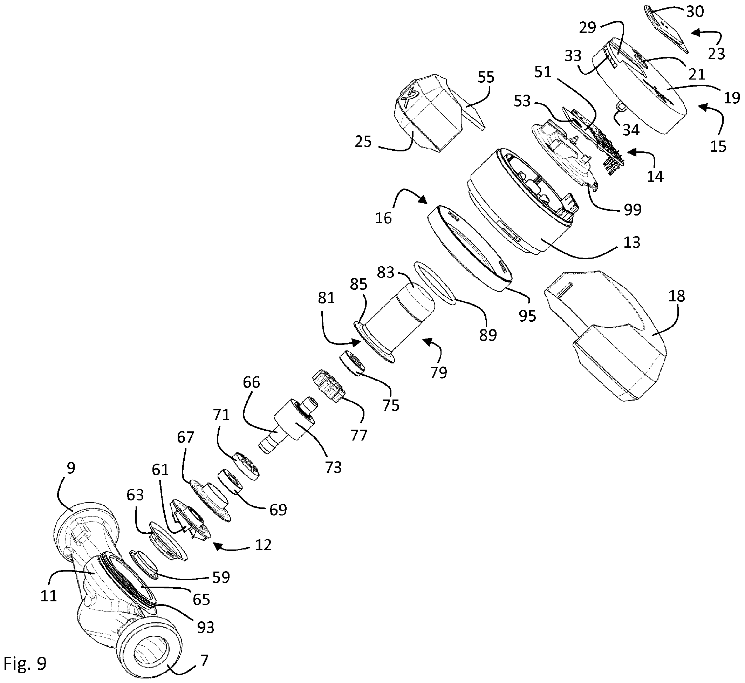

Fig. 1 shows a pump assembly 1 with a centrifugal pump unit 2, an input port 3 and an output port 5, wherein the input port 3 and an output port 5 are coaxially arranged on a pipe axis F on opposing sides of the pump unit 2. The input port 3 and the output port 5 comprise connector flanges 7, 9 for a connection to pipes (not shown). The pump unit 2 comprises a rotor axis R essentially perpendicular to the pipe axis F. A pump housing 11 of the pump unit 2 is arranged between the input port 3 and the output port 5. The pump housing 11 comprises an impeller 12 (see Fig. 9) for rotating counter-clockwise around the rotor axis R and pumping fluid from the input port 3 to the output port 5. The impeller 12 is driven counter-clockwise by a three-phase synchronous permanent magnet drive low-voltage (below 100V) DC motor having a stator located in a stator housing 13 extending from the pump housing 11 along the rotor axis R to an electronics housing 15. The electronics housing 15 has an essentially cylindrical shape like the stator housing 13 and has essentially the same diameter. The stator housing 13 and the electronics housing 15 are essentially coaxially stacked on top of each other along the rotor axis R. The stator housing 13 is mounted to the pump housing 11 by means of a securing member 16 in form of a union nut having essentially the same outer diameter like the stator housing 13 and the electronics housing 15.

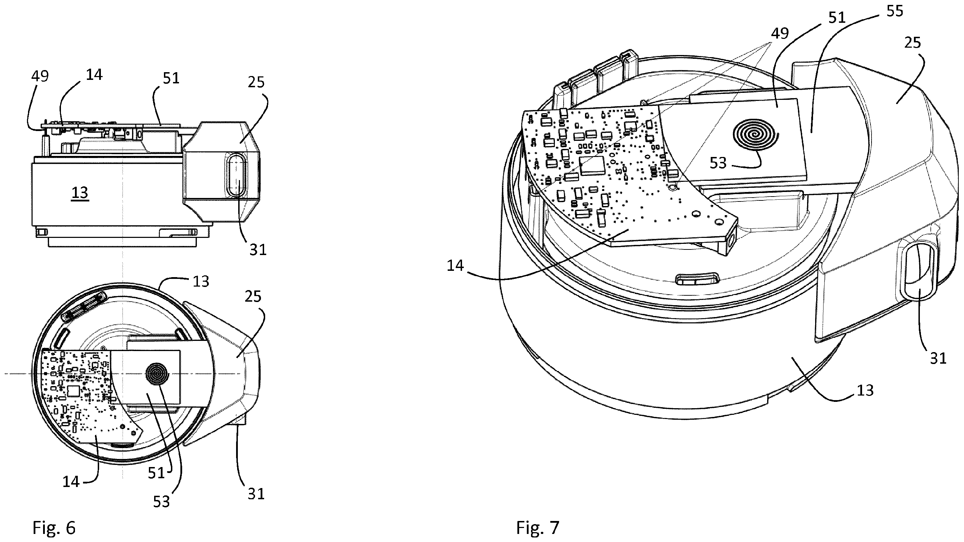

The electronics housing 15 comprises motor control electronics with a main module on a printed circuit board (PCB) 14 (see Figs. 7 and 9) for controlling the motor. The motor and the motor electronics are power supplied via an 110-240V AC power input 17. A power adapter 18 may transform the AC line voltage of 110-240V to a low DC voltage of 5-60V, which it supplies to the PCB 14. The power adapter 18 may comprise a line filter against electromagnetic interference (EMI) and a voltage converter, which thus do not need to be located on the motor electronics PCB 14. Thus, the motor electronics PCB 14 and the electronics housing 15 may have a more compact design. A top face 19 of the electronics housing 15 may comprise a user interface, such as a button 21, a light-emitting diode (LED) and/or a display (not shown). The button 21 may for instance be an on/off-button. One or more LEDs and/or a display may signal an operating parameter or status, e.g. for indicating a normal operation, a failure mode, a motor speed, a successful/unsuccessful wireless connection, a power consumption, a flow, a head and/or a pressure.

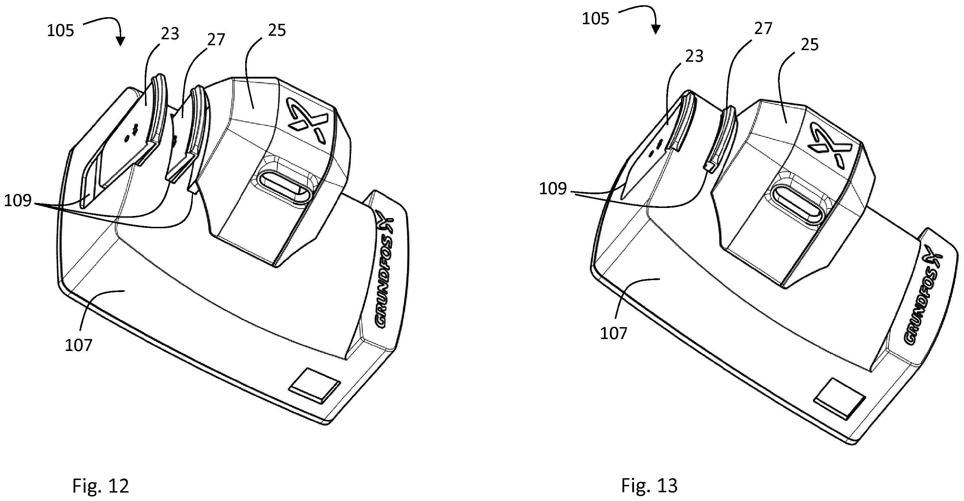

Figs 1 to 3 only show a first plug-in module 23 comprising a Bluetooth module and a third plug-in module 25 comprising an input/output module. A second plug-in module 27 comprising a pump software update is shown in Figs. 12 and 13, wherein the shape of the second plug-in module 27 is essentially the same as the shape of the first plug-in module 23. Therefore, the first plug-in module 23 and the second plug-in module 27 are selectively pluggable into a first position defined by a first slot 29 at the top face 19 of the electronics housing 15. The first plug-in module 23 and the second plug-in module 27 have flat chip-like shape for sliding into the first slot 29 in a radial direction with respect to the rotational axis R. The first plug-in module 23 and the second plug-in module 27 comprise a finger grip ridge 30 for facilitating pulling the module out of the first slot 29. The first slot 29 defines a recess in the top face 19 of the electronics housing 15, so that the recess is filled by the first plug-in module 23 or the second plug-in module 27, respectively, when plugged in.

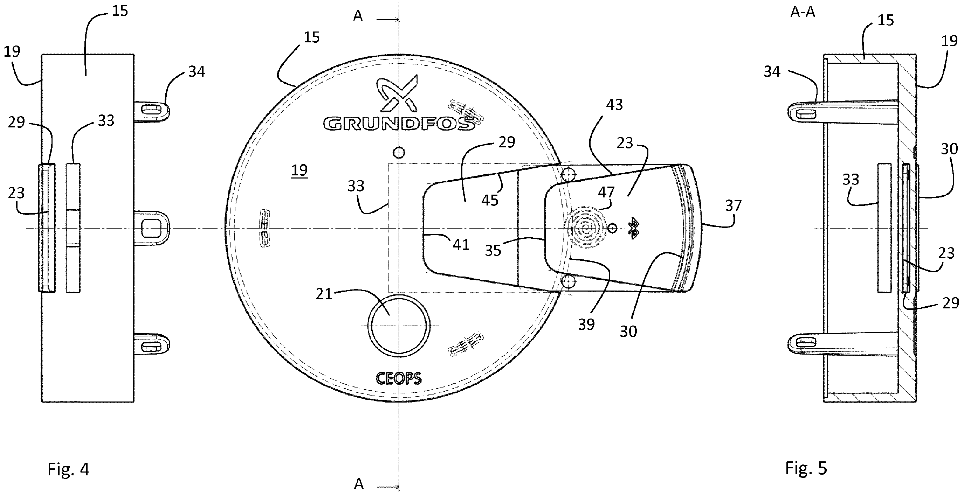

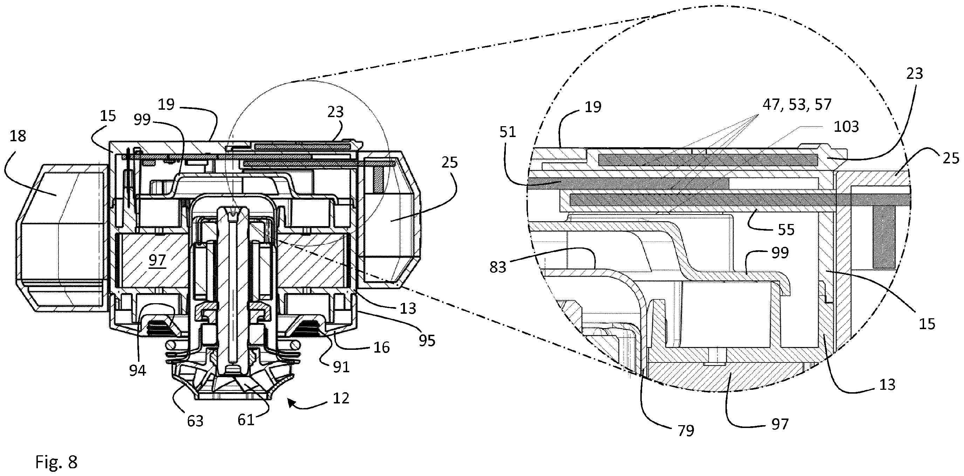

The third plug-in module 25 comprises different hardware than the other plug-in modules. As an input/output module it may serve as a module for connecting a sensor, such as a temperature, flow or pressure sensor, or a computer, or a display to the pump unit 2. The third plug-in module 25 thus comprises an input/output connection 31 for a sensor, a computer or a display. For instance, the pump unit 2 may receive sensor signals indicative of temperature, pressure and/or flow via the input/output connection 31 of the third plug-in module 25. Alternatively or in addition, the pump unit 2 may output operating parameters like motor speed and/or power consumption via the input/output connection 31 of the third plug-in module 25 to a computer or display. Therefore, its shape differs from the shape of the other plug-in modules. The third plug-in module 25 is plugged into a second position axially below the first position, wherein the second position is defined by a second slot 33 parallel to the first slot 29 with a slight distance in axial direction with respect to the rotational axis R (better visible in Fig. 4). The distance between the first slot 29 and the second slot 33 is occupied by the motor electronics PCB 14 protruding between the slots 29, 33 (see Fig. 8). The electronics housing 15 is fixed by latches 34 to the stator housing 13 below. The top view of Fig. 4 shows nicely the difference in shape between the first slot 29 for receiving the first or the second plug-in module 23, 27, and the second slot 33 for receiving the third plug-in module 25. The first and second plug-in module 23, 27 comprise a narrow front end 35 and a wide back end 37. The first slot 29 comprises a corresponding wide front opening 39 and a narrow back end 41. This facilitates plugging in the plug-in module 23, 27 with the narrow front end 35 first into the wide front opening 39 of the first slot 29. The first and second plug-in module 23, 27 further comprise lateral tapering surfaces 43 between the front end 35 and the back end 37 for providing a frictional contact with corresponding slot tapering surfaces 45 for holding the plugged-in plug-in module 23, 27 in place.

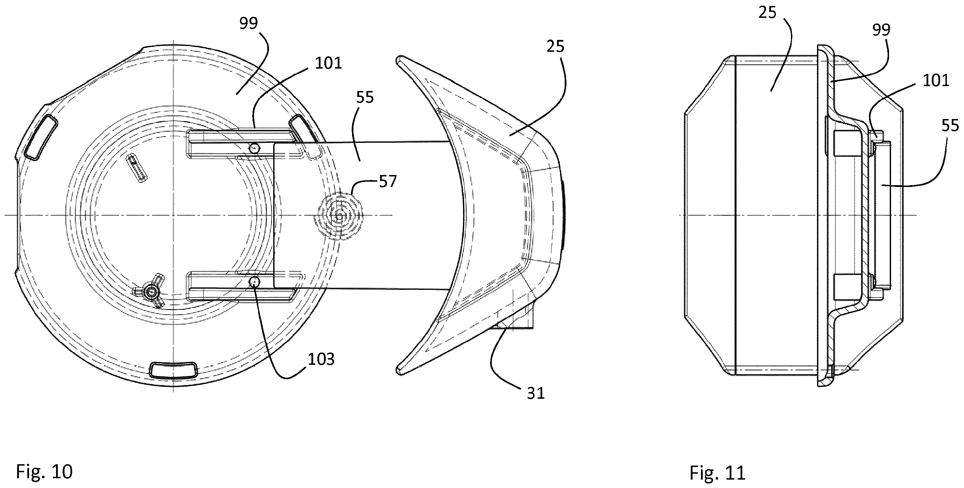

The first and second plug-in modules further comprise an embedded transmission coil 47 for wireless communication with the main module of the control unit of the pump assembly 1. Figures 6 and 7 better show the main module of the control unit of the pump assembly 1. The main module is located on a motor electronics PCB 14 essentially extending perpendicular to the rotational axis R and in parallel to the top face 19 of the electronics housing 15. The motor electronics PCB 14 is mechanically fixed to a top face of the stator housing 13 by three connectors 49 and comprises a transmission coil section 51. The transmission coil section 51 is located between the first slot 29 and the second slot 33 and comprises a transmission coil 53 for communicating with the transmission coil 47 of the first or second plug-in module 23, 27. When the first or the second plug-in module 23, 27 is plugged into the first position, the transmission coil 47 of the first or second plug-in module 23, 27 and the transmission coil 53 of the motor electronics PCB 14 are coaxially aligned for achieving a good wireless coupling between the coils 47, 53. Figs. 6 and 7 show the third plug-in module 25 plugged into the second position, i.e. in the second slot 33. The third plug-in module 25 comprises a plug-in portion 55 fitting into the second slot 33 and with essentially the same transmission coil 57 (see Fig. 10) embedded like the transmission coil 47 of the first and second plug-in module 23, 27. The transmission coil 57 is located coaxially below the transmission coil 53 of the transmission coil section 51 of the motor electronics PCB 14. The main module is able to communicate wirelessly with the first or second plug-in module 23, 27 in the first position and the third plug-in module 25 in the second position via the same communication channel. The exchanged data packages may be addressed according to the plug-in module it is intended for or it is coming from, respectively.

Fig. 8 shows in more detail the sandwich layout between the transmission coils 47, 53, 57 when the plug-in modules 23, 25 are plugged into the first and second position. The central transmission coil 53 of the motor electronics PCB 14 may comprise a flat coil on the top side of the transmission coil section 51 and a flat coil on the bottom side of the transmission coil section 51.

The cut view of Fig. 8 displays the very compact pump design achieved by this disclosure. Where Fig. 8 may be too crowded to see a feature clearly, the exploded view of Fig. 9 may be referred to. Fig. 8 does not show the pump housing 11 and a deflector plate 59 on which the impeller 12 sits. Referring back to Fig. 1, the inlet port 3 curls from the pipe axis F in a fluid-mechanically efficient way to lead from below coaxially with the rotor axis R into an impeller chamber of the pump housing 11. The impeller chamber has a concentric bottom entry in fluidic connection with the inlet port 3 and a tangential exit in fluidic connection with the outlet port 5. The deflector plate 59 (see Fig. 9) is located concentrically with the rotor axis R at the bottom entry of the impeller chamber to prevent a back-flow of fluid into the inlet port 3. The impeller 12 sits concentrically on the deflector plate 59. The impeller 12 comprises inner spiral vanes 61 and at its bottom side an impeller plate 63 for forming fluid-mechanically efficient impeller channels for accelerating fluid radially outward and tangentially in counter-clockwise direction by a centrifugal force when the impeller 12 rotates. Such a radially outward and tangentially flow creates a central suction of fluid from the inlet port 3.

The pump housing 11 has an upper circular opening 65 (see Fig. 9) through which the impeller 12 can be placed into the impeller chamber during manufacturing of the pump unit 2. In order to achieve a most compact pump design, the circular opening 65 may have a just slightly larger diameter than the impeller 12. A rotor axle 66 extends along the rotor axis R through a bearing carrier 67 and is rotationally fixed with a lower end portion to the impeller 12. The bearing carrier 67 centres a first radial bearing ring 69 being in sliding contact with the rotor axle 66. The rotor axle 66 and the first radial bearing ring 69 may comprise carbon and low friction radial contact surfaces. A very thin lubricating film of the pumped fluid in the range of microns may establish between the rotor axle 66 and the first radial bearing ring 69 when the rotor axle 66 rotates relative to the fixed first radial bearing ring 69. An axial bearing plate 71 is placed on top of the first radial bearing ring 69 to provide a low friction annular top surface. The low friction annular top surface of the axial bearing plate 71 may be wavy or comprise radial channels for fluid flow (better visible in Fig. 9) for establishing a thin lubricating film of the pumped fluid and reducing friction. A permanent magnet rotor 73 embraces the rotor axle 66 and is rotationally fixed to it. A bottom annular surface of the permanent magnet rotor 73 slides during rotation on the fixed low friction annular top surface of the axial bearing plate 71. A second radial bearing ring 75 is in low-friction sliding contact with an upper end of the rotor axle 66. The second radial bearing ring 75 is centred by a bearing bushing 77 with radial extensions and axial channels for allowing an axial fluid flow (better visible in Fig. 9). As the impeller 12 sucks itself, together with the rotor axle 66 and the permanent magnet rotor 73, downwards during rotation, only one axial bearing plate 71 is necessary.

The deflector plate 59, the impeller 12, the rotor axle 66, the first radial bearing ring 69, the axial bearing plate 71, the permanent magnet rotor 73, the second radial bearing ring 75 and the bearing bushing 77 are so-called "wet parts" which are all immersed in the fluid to be pumped. The rotating ones of the wet parts, i.e. the impeller 12, the rotor axle 66 and the permanent magnet rotor 73 are so-called "wet-running" using the fluid to be pumped for providing lubricant films for reducing friction at two radial surfaces and one axial contact surface. The fluid to be pumped is preferably water.

The wet parts are enclosed by a pot-shaped rotor can 79 such that fluid can flow between the impeller chamber and the inner volume of the rotor can 79. The rotor can 79 comprises a lower first axial end 81, i.e. the axial end facing the impeller 12, and an upper second axial end 83, i.e. the axial end facing away from the impeller 12 (see Fig. 9). The first axial end 81 is open and defines a rotor can flange 85. The second axial end 83 is closed. The securing member 16 comprises a central opening through which the rotor can 79 protrudes such that the securing member 16 embraces the rotor can 79 and secures the rotor can flange 85 towards the pump housing 11. A flange of a bearing carrier 67 is placed between the rotor can flange 85 and the pump housing 11. Thus, the securing member 16 secures both the rotor can 79 and the bearing carrier 67 via a water-tight coupling. The coupling is water-tight, because a sealing ring 89 is pressed by the securing member 16 onto the rotor can flange 85.

The securing member 16 is a union nut with an inner thread 91 being screwed on an outer thread of 93 of the pump housing 11. The securing member 16 further comprises a conical annular surface 94. The conical annular surface 94 urges the sealing ring 89 both axially downward against an upper annular surface of the rotor can flange 85 and radially outward against a peripheral wall of the pump housing 11. Thereby, the wet parts are water-tightly sealed by the sealing ring 89. The stator housing 13 and/or the electronics housing 13 can be unmounted without opening the water-tight coupling between the rotor can 79 and the pump housing 11.

The securing member 16 extends further radially outward defining a lateral side wall 95 having essentially the same diameter as the stator housing 13 and the electronics housing 15. The lateral side wall 95 comprises a coupling between the securing member 16 and stator housing 13, wherein said coupling is located radially more outward than the water-tight coupling of the securing member 16 to the rotor can 79. Said coupling may be a thread connection or a bayonet coupling between the lateral side wall 95 and the stator housing 13. In order to fix the stator housing 13 rotationally, it is preferred that said coupling closes in clockwise direction, because the driving of the rotor in counter-clockwise direction provokes a counter-torque on the stator 97, which preferably closes said coupling rather than opening it.

The stator housing 13 encloses a stator 97 with six coils of copper wire windings (not shown) around a ferromagnetic core in a star-shaped arrangement of a speed-controlled three-phase synchronous DC motor. The stator 97 is axially aligned with the permanent magnet rotor 73 for providing a most efficient magnetic flux for driving the permanent magnet rotor 73. The stator housing 13 may be closed on top by a stator housing lid 99 through which electronic contacts of the stator 97 are fed. The electronics housing 15 may be clicked axially onto the stator housing 13 and fixed by the latches 34. The PCB 14 with the motor electronics may extend perpendicular to the rotor axis R parallel to the top face 19 and in close proximity to it allowing a compact design. The PCB 14 are connected with the electronic contacts of the stator 97 fed through the stator housing lid 99. The proximity of the PCB 14 to the top face 19 of the electronics housing 15 allows for a simple design of user interfaces like the button 21, LEDs, the plug-in modules 23, 27 and/or a display. The user interfaces may be located on the PCB 14 with the top face 19 merely providing windows, holes or mechanical button parts.

In the shown example, the second axial end 83 of the rotor can 79 is not mechanically centred, suspended or supported by the stator housing 13. The rotor can 79 is only fixed by its rotor can flange 85 at its first axial end 81. It is thus preferred that the rotor can 79 has a stable and rigid design to hold against axial and radial forces during operation of the pump unit 2. One feature stabilising the rotor can 79 is its at least partially convexly shaped second axial end 83. As shown in Fig. 9, the edge between a flat top face and the lateral wall of the rotor can 79 is rounded in form of a quarter-circle. In other embodiments (not shown), the second axial end 83 may be spherical, elliptical, ellipsoidal or otherwise coneshaped. This has a further advantage of a smoother fluid flow within the rotor can 79 to reduce mechanical resistance caused by turbulences.

Figs. 10 and 11 show a top and a side view on the stator housing lid 99 comprising rails 101, here with an L-shaped profile, for guiding the plug-in portion 55 of the third plug-in module 25 into the second position, i.e. the second slot 33. The rails 101 comprise at least one friction dot 103 for keeping the third plug-in module 25 plugged-in into the second position. The friction dots 103 also urge the plug-in portion 55 of the third plug-in module 25 slightly upward to close the gap between the transmission coil section 51 of the motor electronics PCB 14 and the plug-in portion 55 of the third plug-in module 25 as much as possible (see Fig. 8).

Figs. 12 and 13 show an external unit 105 with an external module in form of a power supply module. Alternatively or in addition, it may be equipped and configured to serve as a connector box or "gateway" of a system with multiple pump units. The external unit 105 as part of the pump assembly 1 is separate from the pump unit 2 and has its own external housing 107. The external housing 107 comprises three slots 109, of which two are essentially the same as the first slot 29 and one is essentially the same as the second slot 33. The first plug-in module 23 and the second plug-in module 27 are selectively pluggable into a third position in either one of those slots 109 having the shape of the first slot 29. The third plug-in module 25 is selectively pluggable into a third position in the slot 109 having the shape of the second slot 33. The external module is here configured to inductively power or charge one or more plug-in modules when they are plugged into the third position, i.e. the slots 109. Thereby, certain functionalities of the plug-in modules may be used independently and remotely of the pump unit 2. Alternatively or in addition, the external module may be configured with a logic to control and communicate with multiple pump units.

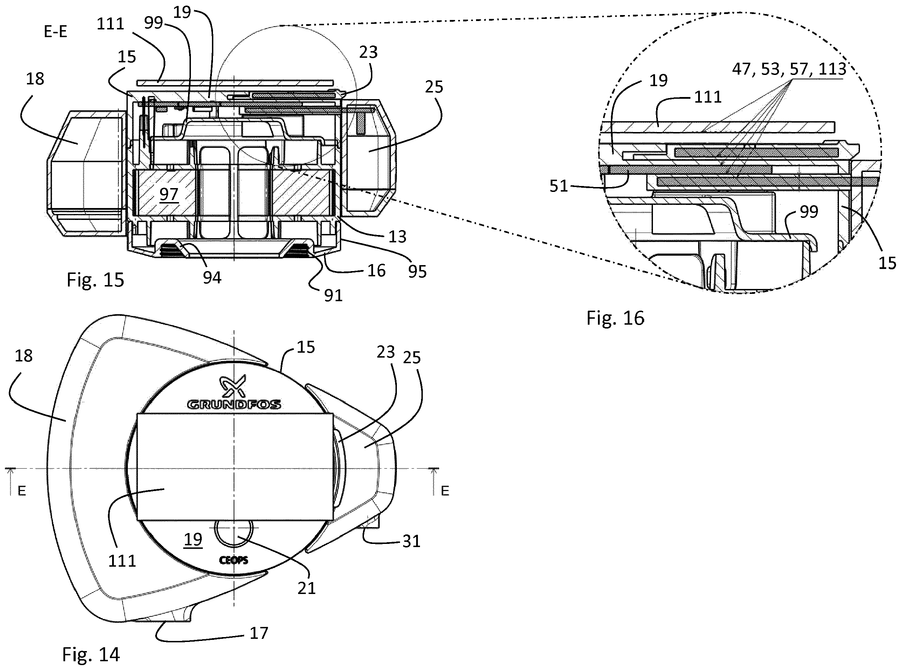

Figs. 14, 15 and 16 show how the main module may be configured via at least one wireless communication channel by an external configuration module being in close proximity of the housing 15. The external configuration module may be located on an external PCB 111, which is located just slightly above the pump unit 2 in parallel to the top face 19. The external PCB 111 may be part of a stationary configuration device in the production or assembly line for pump assemblies (not shown). The pump unit 2 may pass or temporarily stop beneath the external PCB 111 as shown in Figs. 14, 15 and 16. As shown in Fig. 16, the external PCB 111 comprises a transmission coil 113 at its lower side such that the transmission coil 53 of the main module can be arranged coaxially to the transmission coil 113 of the external PCB 111. The main module may thus be simultaneously inductively powered by the external configuration module during configuration. The top face 19 and/or the plug-in portions of the first and second plug-in module may mainly comprise a plastic material or another non-conducting material to allow for, i.e. not shield, such a wireless configuration.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics or steps which have been described with reference to one of the above exemplary embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the spirit and scope of the disclosure, which should be determined from the appended claims and their legal equivalents.

## Claims

1. A pump assembly (1) comprising
- a pump unit (2) with an impeller (12) having a rotational axis (R),
- an electrical drive motor for driving the impeller (12), and
- a control unit for controlling the drive motor,
wherein the control unit comprises a main module in a housing (15), a first detachable plug-in module (23) and a second detachable plug-in module (27),
wherein the main module is fixed to the drive motor and configured to control the drive motor,
wherein the first plug-in module (23) and the second plug-in module (27) are selectively pluggable into a first position to communicate with the main module via at least one wireless communication channel.

2. The pump assembly (1) according to claim 1, wherein the first position is defined by a first slot (29) in the housing (15).

3. The pump assembly (1) according to claim 2, wherein the first slot (29) extends essentially perpendicular to the rotational axis (R).

4. The pump assembly (1) according to any of the preceding claims, wherein a surface of the first or the second plug-in module (23, 27) forms a surface of the housing when the first or second plug-in module (23, 27), respectively, is plugged into the first position.

5. The pump assembly (1) according to any of the preceding claims, the first and the second plug-in module (23, 27) or a third plug-in module (25) are selectively pluggable into a second position to communicate with the main module via at least one wireless communication channel.

6. The pump assembly (1) according to claim 5, wherein the second position is defined by a second slot (33) in the housing (15).

7. The pump assembly (1) according to claim 6, wherein the second slot (33) is essentially parallel to the first slot (29).

8. The pump assembly (1) according to claim 6 or 7, wherein the main module comprises a transmission coil (53) between the first slot (29) and the second slot (33), wherein the main module is configured to communicate with the first, the second and/or the third plug-in module (23, 25, 27) when plugged into the first and/or second position via the transmission coil (53) and via a single wireless communication channel.

9. The pump assembly (1) according to claim 8, wherein the transmission coil (53) defines a wireless transmission axis perpendicular to the first slot (29) and/or the second slot (33).

10. The pump assembly (1) according to any of the preceding claims, further comprising an external unit (105) with an external module in an external housing (107), wherein the first plug-in module (23), the second plug-in module (27) and/or a third plug-in module (25) are selectively pluggable into a third position, wherein the third position is defined by one or more slots (109) in the external housing (107).

11. The pump assembly (1) according to claim 10, wherein the external module (105) comprises a power supply and/or a gateway for a plurality of pump units.

12. The pump assembly (1) according to any of the preceding claims, wherein the first, the second and/or a third plug-in module (23, 25, 27) comprise at least one module selected from the group consisting of: a Bluetooth communication module, a near field communication (NFC) module, a radio-frequency identification (RFID) module, an infrared module, an IEEE 802.11b direct sequence module, a wireless power transfer (WPT) module, a capacitive coupling module and an inductive coupling module, a sensor module, a pump programming module, a debugging module, an updating module, a display module, and a user input module.

13. The pump assembly (1) according to claim 12, wherein the first, the second and the third plug-in module (23, 25, 27) differ from each other in at least one comprised module.

14. The pump assembly (1) according to any of the preceding claims, wherein the first, the second and/or a third plug-in module (23, 25, 27) each comprise a transmission coil (47, 57) for both receiving electrical power inductively and communicating wirelessly.

15. The pump assembly (1) according to claim 14, wherein the transmission coil (47) of the first plug-in module (23) is essentially identical to the transmission coil (57) of the second and/or third plug-in module (25, 27).

16. The pump assembly (1) according to any of the preceding claims, wherein the main module is configured to receive a first operating command from the first, the second and/or a third plug-in module (23, 25, 27), wherein the main module is configured to continue controlling the drive motor based on the first operating command until the main module receives a second operating command that overrules the first operating command.

17. The pump assembly (1) according to any of the preceding claims, wherein the at least one wireless communication channel comprise at least one of the group consisting of: Bluetooth communication, near field communication (NFC), radio-frequency identification (RFID), infrared communication, IEEE 802.11b direct sequence, wireless power transfer (WPT), capacitive coupling and inductive coupling.

18. The pump assembly (1) according to any of the claims 6 to 17, wherein the first and/or the second slot (29, 33) comprise a tapering surface (45) for providing a frictional resistance with a corresponding tapering surface (43) of the first and/or second plug-in module (23, 27) when the first and/or second plug-in module (23, 27) is plugged into the first and/or second position.

19. The pump assembly according to any of the claims 10 to 18, wherein the first plug-in module (23) is configured to wirelessly communicate with the second or third plug-in module (25, 27), when the first plug-in module (23) is plugged into the first, second or third position and the second or third plug-in module (25, 27) is plugged into another one of the first, second and third position.

20. The pump assembly according to any of the preceding claims, wherein the first, second and/or third plug-in module (23, 25, 27) comprise a user interface for receiving user input and/or a display for displaying information.

21. The pump assembly according to any of the preceding claims, wherein the main module is configurable via at least one wireless communication channel by an external configuration module being in close proximity of the housing.

22. A plug-in module (23, 25, 27) of a pump assembly (1) according to any of the preceding claims, wherein the plug-in module (23, 25, 27) is pluggable into a first position in order to:
- be inductively powered or charged,
- to communicate with a main module of the pump assembly via at least one wireless communication channel, and
- to provide a functionality to the main module,
wherein the plug-in module (23, 25, 27) is configured to provide said functionality only to the main module of the pump assembly it communicates with for the first time.

23. The plug-in module (23, 25, 27) according to claim 22, wherein said functionality is a one-time upload of data to the main module, and wherein the plug-in module (23, 25, 27) is disposable after said one-time upload of data.

24. The plug-in module (23, 25, 27) according to claim 22 or 23, wherein said functionality is an addition or update of software of the main module.
